# EUROPEAN PATENT SPECIFICATION

(11) **EP 3 585 219 B1**
(45) Date of publication and mention of the grant of the patent: **23.11.2022**
(21) Application number: 18708754.9
(22) Date of filing: 19.02.2018
(51) Int. Cl.: A47J 31/06

(54) **RE-USABLE CONTAINER FOR SUBSTANCES FOR THE PREPARATION OF LIQUID BEVERAGES**
WIEDERVERWENDBARER BEHÄLTER FÜR SUBSTANZEN ZUR HERSTELLUNG VON FLÜSSIGEN GETRÄNKEN
RÉCIPIENT RÉUTILISABLE POUR SUBSTANCES POUR PRÉPARATION DE BOISSONS LIQUIDES

(30) Priority: 23.02.2017 IT 201700020821
(43) Date of publication of application: 01.01.2020
(73) Proprietor: WayCap S.r.l., 10125 Torino (IT)
(72) Inventor: De Ruvo, Davide, 10124 Torino (IT); Pibiri, Matteo, 10141 Torino (IT); Rossi, Matteo, 10125 Torino (IT)
(74) Representative: De Bonis, Paolo
(86) International application number: PCT/IB2018/051008
(87) International publication number: WO 2018/154426

(56) References cited:
- WO-A1-2016/075630
- CN-U- 201 895 880
- CN-U- 202 408 516
- DE-U1-202010 002 994

## Description

### Field of the invention

The present invention relates to re-usable containers for substances for the preparation of a liquid beverage, in particular designed for use as cartridges for a liquid beverage-dispensing machine. More specifically, the invention has been developed with particular reference to re-usable containers of the type comprising:
- a first end portion;
- a second end portion; and
- a shell comprised between said first and second end portions and delimiting therewith an internal volume of the container designed to receive a substance for the preparation of a liquid beverage,
wherein:
- the first end portion includes one or more first apertures for inlet of a liquid into said internal volume; and
- said second end portion has a plurality of second apertures configured for exit of a liquid beverage that can be obtained by interaction of said liquid with a substance for the preparation of a liquid beverage in the internal volume,
wherein moreover the second end portion is removable.

### Prior art

The state of the art offers numerous examples of reusable containers for substances for the preparation of a liquid beverage commonly referred to as "pods" or "capsules". Such examples can be found, i.a., in WO 2016/075630 A1, CN 202 408 516 U, DE 20 2010 002994 U1, and CN 201 895 880 U. These substances include, for example, precursors in powdered or ground form (e.g., coffee) or in granules, whereby it is possible to prepare a liquid beverage.

In particular, the production of disposable containers for ground coffee is particularly vast, as likewise there is a considerable number of examples of re-usable containers for coffee (or other beverages in powder form).

Known solutions of containers for beverages in powdered or ground form, in particular coffee, may be found, for example, in the documents Nos. WO 2014/041419 A1, US 2014/0272048 A1, and FR 2 946 854 B3. Each of the containers forming the subject of these documents is re-usable thanks - among other things - to the provision of a removable end portion.

The inventors filed in the name of whom is the present patent application have developed a re-usable container described in the document No. WO 2016/199007 A1.

On the basis of the experience gleaned with the above container, the inventors have been able to identify a drawback common to all re-usable capsules of a known type. A re-usable capsule can, by definition, be used with any substance for the preparation of a beverage. This already per se creates a considerable variance of the physical characteristics of the substance that can be put into the container, which might not necessarily present optimal characteristics as regards preparation of a given beverage. Not only this, but also one and the same substance may differ considerably in its own characteristics according to the country or geographical area of sale. To take, for example, the case of coffee, this may differ markedly in grain size from one country to another, thus leading to an unsatisfactory quality of the beverage or even, in the most serious cases, malfunctioning of the dispensing machine in the case where the grain size differs considerably from the samples used for development of the container.

### Object of the invention

The object of the present invention is to solve the technical problems mentioned previously. In particular, the object of the invention is to provide a re-usable container for substances for the preparation of liquid beverages that can be used with optimal results with any substance irrespective of the characteristics of the substance, and even in the case of marked variance of the characteristics of the substance itself.

### Summary of the invention

The object of the invention is achieved by a reusable container having the features forming the subject of one or more of the ensuing claims, which form an integral part of the technical disclosure provided herein in relation to the invention.

In particular, the object of the invention is achieved by a container having all the features listed in the preamble of the present description and moreover characterized in that the second end portion is dismountable and includes an annular element and an insert that can be removably coupled into the annular element, wherein the insert has the plurality of second apertures.

### Brief description of the drawings

The invention will now be described with reference to the annexed drawings, which are provided purely by way of non-limiting example, wherein:
- Figure 1 is an exploded cross-sectional view of a container for a substance for the preparation of a liquid beverage according to a preferred embodiment of the invention;
- Figure 2 is a cross-sectional view corresponding to the container of Figure 1, but in the assembled condition;
- Figure 3 is an exploded perspective view of an end portion indicated by the arrow III in Figure 2;
- Figures 4A to 41 illustrate alternative embodiments of an insert for the second end portion of the container according to the invention, in particular as regards the shape and/or arrangement of the first apertures;
- Figures 5A to 5F illustrate alternative embodiments of an insert for the second end portion of the container according to the invention, in particular with as regards the structure of the insert, whereas Figure 6 illustrates assembly of the insert of Figures 5E/5F within the second end portion; and
- Figures 7A and 7B illustrate a preferred embodiment of the insert for the second end portion; in particular, they illustrate views of opposite faces of the insert.

### Detailed description

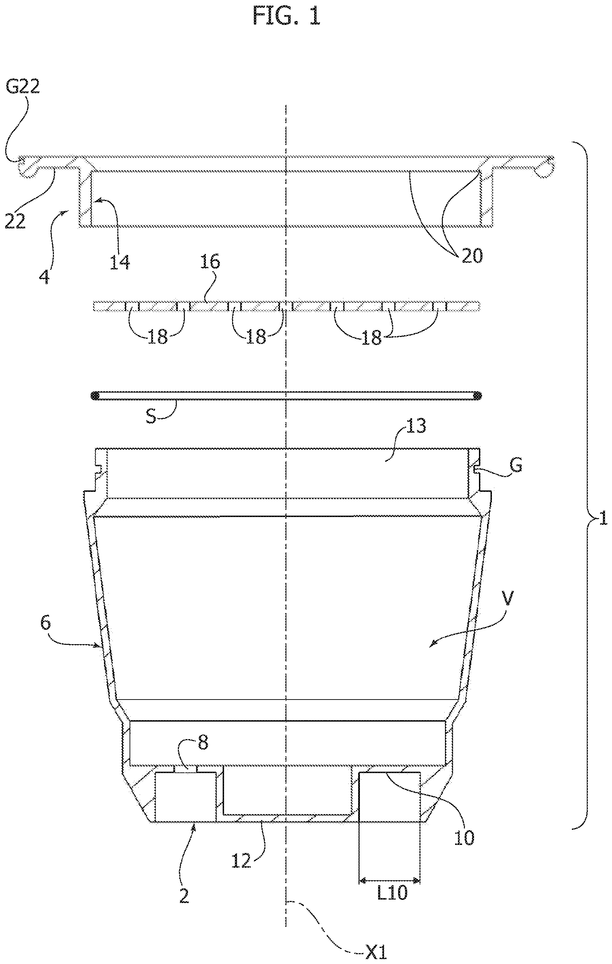

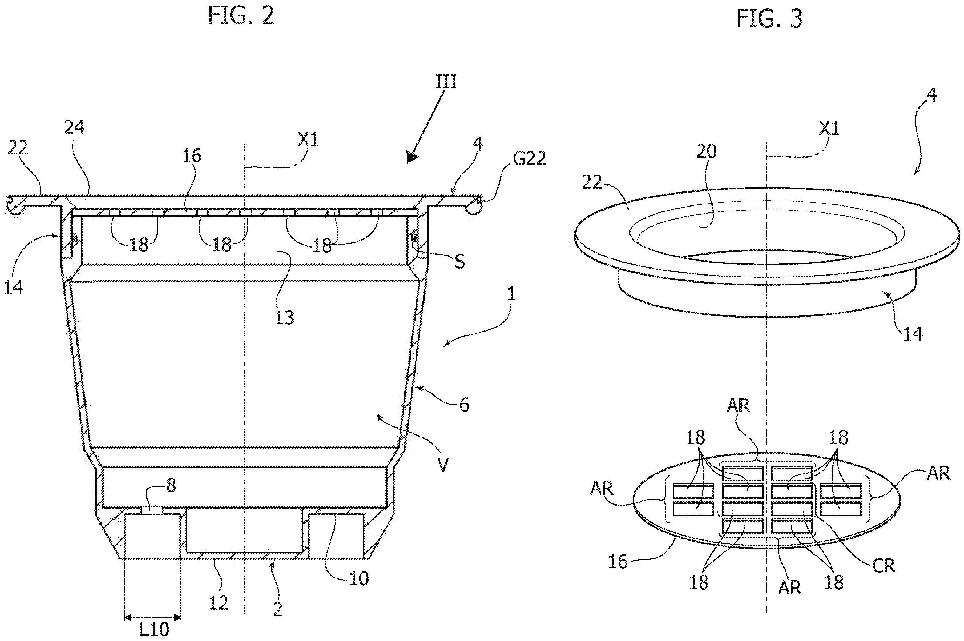

With reference to Figures 1 and 2, number 1 designates as a whole a container of a substance for the preparation of a beverage according to various preferred embodiments of the invention. The present description will be developed mainly with reference to a substance such as a precursor of a beverage in powder form, in particular coffee, where by the term "precursor in powder form" is meant a powder for the preparation of the beverage. However, the present description may in general be applied to any substance for the preparation of a beverage.

The container 1 is of a re-usable type and is in particular designed for use as cartridge for a liquid beverage-dispensing machine, which normally functions with non-reusable containers for the precursor in powder form.

The container 1 includes a first end portion 2, a second end portion 4, and a shell 6 that is comprised between the first and second end portions 2, 4 and delimits an internal volume V of the container designed to receive a precursor in powder form. Preferably, the container 1 has a substantially frustoconical shape with axis X1, in so far as the diameter of the end portion 2 is smaller than the diameter of the end portion 4 so that the shell 6 has a substantially frustoconical shape. Except for the provision of apertures in the end portions 2 and 4, the body of the container 1 is of an axisymmetrical type with respect to the axis X1.

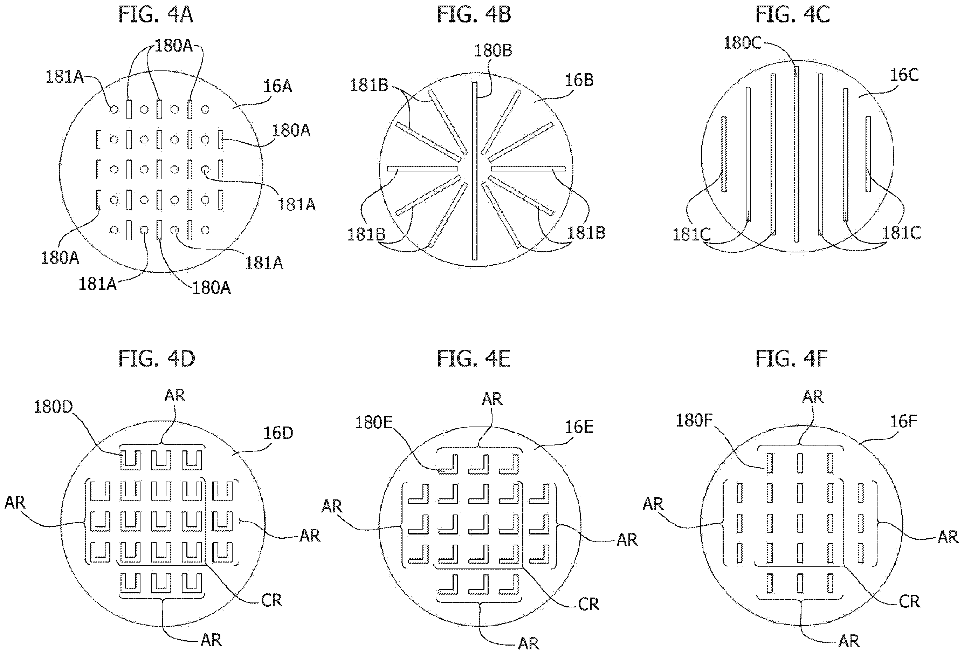

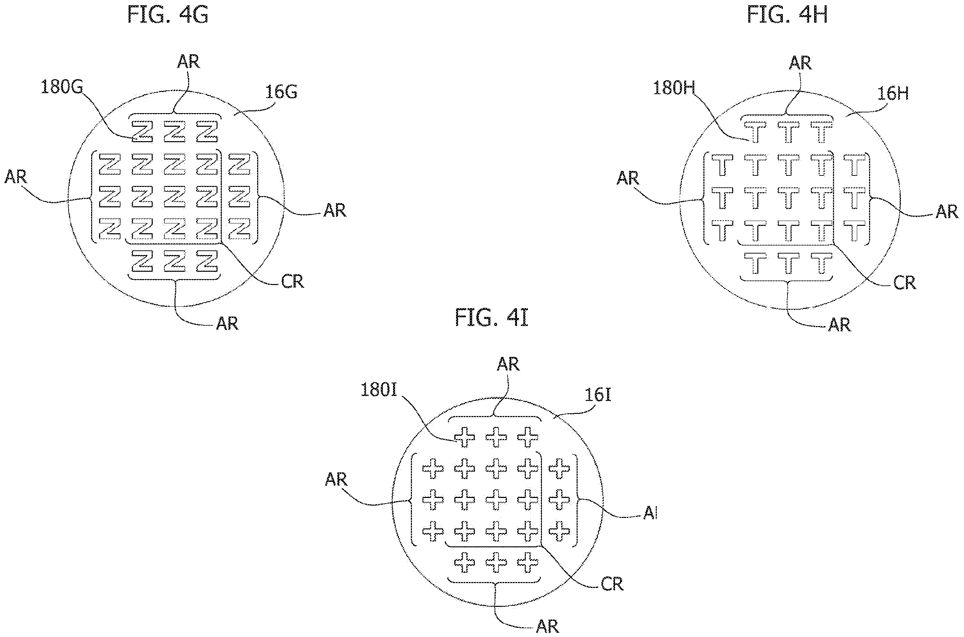

With reference to Figure 4, the first end portion 2 includes at least one first through aperture 8 (i.e., in communication with the internal volume of the container), configured for enabling entry of a liquid into the internal volume V. In the embodiment illustrated herein, the end portion 2 includes three apertures 8 - not visible in the figure - arranged spaced at equally angular distances apart about to the axis X1 (120°). The number may, however, vary: four apertures or five apertures, in either case spaced at equal angular distances apart, are admissible configurations.

Preferably, the apertures 8 are provided within an annular groove 10 that develops axially in the body of the end portion 2 and surrounds a central relief 12 sharing the same axis X1 as the groove 10. Preferably, as may be seen in Figures 1 and 2, the central relief 12 is provided with a hollow structure (with thin wall); i.e., it is not a massive element. However, in some embodiments the opposite is possible; i.e., the relief 12 is provided as a massive element.

It is moreover possible to envisage, in certain embodiments, a central through hole in a position corresponding to the relief 12, sharing the axis X1.

Once again preferably, the groove 10 has a width L10 in a radial direction that is comprised between 2 mm and 5 mm.

Provision of the apertures 8 within the groove 10, hence in a position set back with respect to the end of the end portion 2 ensures compatibility with the dispensing machine in so far as normally the area where the groove 10 is located would be involved in penetration of needles designed to enable passage of hot liquid, which are normally configured for penetration of disposable capsules.

At the opposite end with respect to the one adjacent to the end portion 2, the shell 6 is shaped so as to define a collar 13 of a cylindrical shape, provided on the outer lateral surface of which is an annular groove G configured for housing an annular gasket S, preferably made of elastomeric material (e.g., an O-ring).

With reference to Figures 1 to 3, the second end portion 4 is dismountable and includes an annular element 14, configured for coupling with the shell 6 and in particular with the collar 13, and an insert 16, which can be removably coupled into the annular element 14.

The insert 16 carries a plurality of second apertures 18, which are configured for exit of a liquid beverage that can be obtained, during use, by interaction of the liquid that has previously entered the volume V through the apertures 8 with the precursor in powder form contained within the internal volume V.

In the preferred embodiment illustrated herein, the annular element 14 is provided with a shoulder 20, which constitutes an abutment surface for the insert 16, and a peripheral flange 22, which extends radially beyond the shell 6 so as to provide an axial-position reference (along the axis X1) within the dispensing machine.

In this way, the insert 16 can be inserted into the annular element 14, being introduced axially at the end opposite to the one where the flange 22 is to be provided in such a way that this can slide until it encounters the abutment surface offered by the shoulder 20. Preferably, set on the shoulder 20 is an annular gasket similar to the gasket S (e.g., an O-ring to ensure tightness between the insert 16 and the annular element 14).

Moreover, once again preferably, provided on the periphery of the flange 22 is an annular groove G22 configured for receiving an annular gasket (e.g., of the O-ring type), which enables an improved interference to be provided with the seat that on the dispensing machine receives the container 1, which is in any case provided with very strict tolerances with respect to the seat.

As regards coupling, since preferably both the annular element 14 and the insert 16 have a circular shape, it is envisaged to assign a slight interference between the outer diameter of the insert 16 and the inner diameter of the annular element 14, in such a way that the insert 16 is slightly forced into a position against the shoulder 20, and there held thanks to the aforesaid interference. At the moment of removal, the insert 16 can be extracted - thus providing a dismounting of the end portion 4 - by exerting a slight axial pressure in a direction opposite to that of insertion.

In any case, it should be borne in mind that the interference may not strictly be necessary in so far as - with specific reference to the assembled view of Figure 2 - when the end portion 4 is fitted on the collar 13 to close the container 1, the collar 13 can be used to keep the insert 16 in contact with the shoulder 20. In this connection, the annular gasket S creates a radial interference with the inner surface of the annular element 14 (to prevent any seepage of liquid during use) and keeps the latter in position on the shell 6, thus gripping the insert 16 between the collar 13 and the shoulder 20.

It should be borne in mind, however, that the coupling between the annular element 14 and the collar 13 can occur also by means of a threaded joint, including in particular an internal thread for the inner surface of the tubular element 14 and an external thread for the outer surface of the collar 13. In this case, the action of gripping on the insert 13 is ensured by the threaded joint itself.

Thanks to the shoulder 20, it is moreover possible to retract the top end surface of the insert 16 with respect to the free axial end of the end portion 14, thus defining a recess 24 within which the plurality of second apertures 18 is provided since the bottom of the recess 24 is formed by the insert 16. Since the apertures 18 are through apertures, they are in communication with the internal volume V of the container 1.

According to the embodiment of the insert 16, the apertures 18 are pre-formed (hence they are already provided as through apertures) or else are provided by means of orifices that can open under pressure. In either case, the apertures 18 are not made by the ensemble of needles of the dispensing machine at the moment of insertion of the container 1 therein.

The shape, type (pre-formed apertures or orifices that can open under pressure), and arrangement of the apertures 18 on the insert 16 may vary according to the need so as to adapt as much as possible to the characteristics of the different substances used for the production of the corresponding beverages and so as to adapt likewise to the variability of the characteristics of the substance itself that may exist from one country to another and/or from one variety to another.

Figures 4A to 41 illustrate different embodiments of the insert 16 in which what changes is both the shape and the arrangement of the second apertures 18, which, however, are all pre-formed. The type of the insert 16 in Figures 4A to 41 is, instead, always the same, this being provided as a disk or pad made of sheet material, such as metal plate.

For the purposes of description, the second apertures are here denoted by a reference number that maintains the prefix "18" and that includes a suffix variable according to the type of aperture and/or to the embodiment considered.

With reference to Figure 4A, in a first embodiment of the insert 16, designated by 16A, the apertures 18 include a plurality of I-shaped slits 180A and a plurality of circular apertures 181A.

By the term "slit" is meant an aperture having a shape in plan view (hence, by definition, a geometry belonging to a plane) characterized by a direction of main (and predominant) development and a direction of secondary development, in which the dimension of the shape is considerably smaller than the dimension in the direction of main (and predominant) development.

The I-shape of the slits 180A is an example of rectilinear slit. The term "rectilinear slit" designates - on the basis of the above definition - an aperture having a shape in plan view (hence, by definition, a geometry belonging to a plane) of a substantially rectangular shape that develops prevalently along just one of the two dimensions in the plane (a direction of main and predominant development), whereas the other dimension is characterized by an extremely limited development.

In particular, in the present description, it is assumed by way of reference that the one or more rectilinear slits that come to form each aperture 18 develops/develop prevalently in the direction of the length, with minimal development in the direction of the width necessary only to provide - physically - a passageway. It should be noted that the union of a number of mutually incident rectilinear slits enables broken-line geometries (e.g., L-shaped, Z-shaped, U-shaped, etc.) or crossed geometries (X-shaped, T-shaped, etc.) to be provided that characterize the other embodiments of the insert 16 presented herein.

In alternative embodiments, the main and predominant direction of development may be a curvilinear path. In this case, the term "curvilinear slits" will be used, namely, slits having a shape in plan view where a main and (predominant) direction of development is the aforesaid curvilinear path, and a secondary direction of development is the dimension transverse with respect to the curvilinear path. Constituting an example of curvilinear slits are those that are C-shaped or else S-shaped in plan view.

At a general level, the slits that define the second apertures 18 or 180 (in any one of the embodiments of Figures 4) have a ratio between the dimension in the main, or predominant, direction of development (linear length in the case of rectilinear slits, extension of the curvilinear path in the case of curvilinear slits) and the dimension in the secondary direction of development (width in the case of rectilinear slits, a dimension transverse to the curvilinear path of development in the case of curvilinear slits) comprised between 100 and 3, more preferably between 10 and 6.

Merely by way of example, without this constituting any limitation with respect to the invention, the size in the secondary direction may preferably be comprised between 0.1 mm and 0.4 mm, whereas the size in the main direction may be comprised between 2.5 mm and 3 mm.

However, in some embodiments (e.g., in the subsequent Figure 4B, slit 180B) the size in the main direction may reach approximately 30 mm, from which the aspect ratio of 1:100 is provided when the size in the secondary direction is 0.3 mm.

Both the slits 180A and the circular apertures 181A are arranged aligned in rows of aligned elements (with reference to Figure 4A, the alignment is in a vertical direction considering the orientation of the sheet) alternating with one another.

In this way, in the embodiment of Figure 16A, five rows of slits 180A can be identified with which four rows of circular apertures 181A alternate so that the rows of slits 180A occupy end positions in the series. In the embodiment illustrated herein by way of example, the rows of end slits 180A are shorter and comprise three slits instead of the five that characterize the intermediate rows. For completeness, once again by way of example, the rows of circular apertures have all the same number of elements (five) and the same extension.

The spacing of the circular apertures 181A is moreover such that an aperture 181A always corresponds to an aperture 180A, without occupying the space between two consecutive apertures 180A. Once again, by scanning the arrangement in a direction orthogonal to that of alignment of the rows, five horizontal rows are defined (the bottom and top ones of reduced extension) in which a slit 180A and an aperture 181A alternate for the entire extension of the rows.

With reference to Figure 4B, the second apertures 18 include a diametral slit 180B and a plurality of radial slits 181B. The angular interval between consecutive slits (181B, or 180B where it appears) is 30° (with reference to the median line of the slit).

With reference to Figure 4C, the plurality of second apertures includes a diametral slit 180C and a plurality of chordal slits 181C arranged symmetrically with respect to the diametral slit 180C. In this embodiment, a total of six chordal slits 181C is provided, arranged in sets of three on opposite sides of the slit 180C and of length progressively decreasing as the distance from the slit 180C (i.e., from the axis X1) increases.

Preferably, the size of each aperture in the secondary direction of development (width in this case) is constant, but it is possible to envisage embodiments in which said size may be made to vary according to the distance from the axis X1, for example, to maintain the aspect ratio constant, or else to maintain the area of the apertures 181C constant(or within a certain range of values).

More in general, whatever the configuration of the insert 16 considered, the second apertures can have a constant section along the wall thickness of the insert 16 or else can have a variable section in a direction parallel to the axis X1. In particular, examples of variable section comprise a convergent section (proceeding from the internal volume V towards the outside) or a divergent section (once again proceeding from the internal volume V towards the outside).

The embodiments of the insert 16 represented in Figures 4D to 41 (inserts 16D to 161) are characterized by the presence of second apertures provided via an orderly scheme of identical slits, and in particular a scheme having the shape of a Greek cross.

The slits that form the second apertures on each of the inserts 16D to 161 are rectilinear slits (i.e., I-shaped slits) or combinations of I-shaped slits arranged in an incident way to define derived shapes (for example, U-shaped slits, L-shaped slits, Z-shaped slits, T-shaped slits, cross-shaped slits).

What all these embodiments share in common is the arrangement of the apertures to form a heart shape CR and four arms AR, where the heart shape CR is defined by a square mesh of nine slits (3 x 3), and each arm AR is defined by a row of three slits. The number of the slits in the heart shape CR and in the arms AR may of course vary. It is possible in any case to envisage alternative embodiments where the envelope of the entire arrangement of the second apertures 18/180 has a square shape (like the heart shape CR), with an arrangement of 4 x 4 apertures 18/180 or 5 x 5 apertures 18/180.

In detail, these are the characteristics of the embodiments of Figures 16D to 161:
- the insert 16D of Figure 4D includes a plurality of U-shaped slits 180D arranged according to the Greek-cross scheme described above;
- the insert 16E of Figure 4E includes a plurality of L-shaped slits 180E arranged according to the Greek-cross scheme described above;

- the insert 16F of Figure 4F includes a plurality of I-shaped slits 180D arranged according to the Greek-cross scheme described above;
- the insert 16G of Figure 4G includes a plurality of Z-shaped slits 180D arranged according to the Greek-cross scheme described above;
- the insert 16H of Figure 4D includes a plurality of T-shaped slits 180H arranged according to the Greek-cross scheme described above; and
- the insert 161 of Figure 41 includes a plurality of cross-shaped slits 180D arranged according to the Greek-cross scheme described above.

In all the embodiments of Figures 4D to 4I (with the exception, for obvious reasons, of the embodiment of Figure 4F), the combination of incident slits that give rise to the U-shaped, L-shaped, Z-shaped, T-shaped, cross-shaped geometries is chosen in such a way that the geometry in question can be inscribed in a square.

In this connection, Figure 3 illustrates an embodiment of the insert 16 in which the second apertures 18 maintain the Greek-cross arrangement (see the references CR, AR), but are provided as pre-formed quadrangular apertures. The embodiment of the insert 16 illustrated in Figure 3 is preferably used for providing inserts made of composite material, i.e., ones including more than one material, as will be described in detail shortly.

Of course, it is possible to size the apertures in such a way that the aforesaid geometries can as a whole be inscribed in a rectangle (which, on the other hand, is already the condition that applies to the embodiment of Figure 4F).

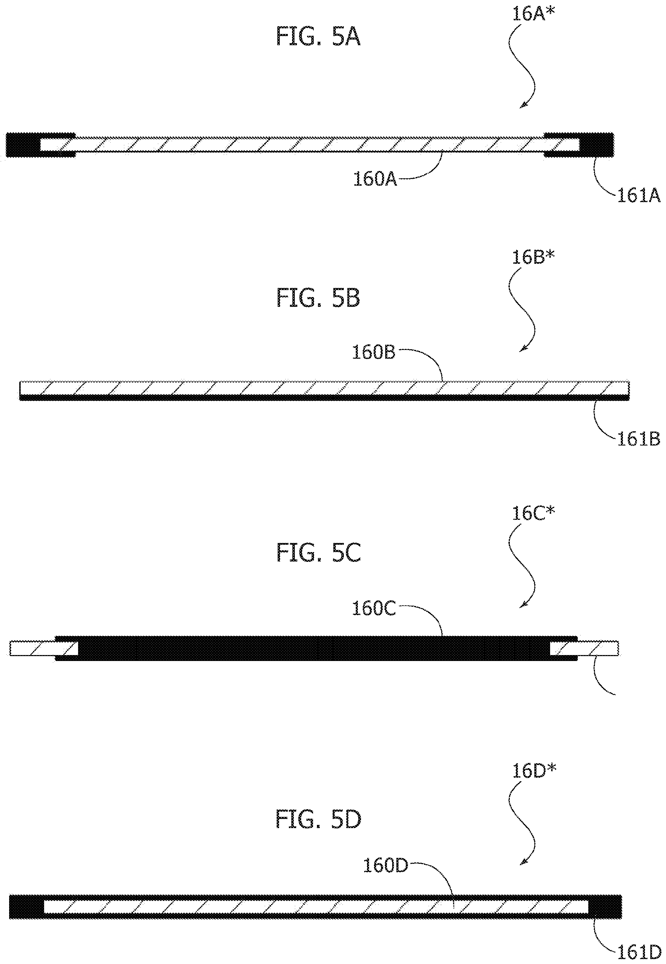

With reference to Figures 5A-5D, the same insert 16 can be provided with a plurality of different configurations, possibly also using more than one material.

Each of the embodiments of the insert 16 illustrated in Figures 5A, 5B, 5C, 5D (referred as insert 16A*, 16B*, 16C*, 16D*), can present any of the schemes of apertures 18, 180, 181 represented in Figures 4A-4I. These, however, are not the only possibilities, as will be evident hereinafter.

With reference to Figure 5A, the insert 16A* includes a disk 160A, preferably made of rigid material, more preferably made of metal material (metal plate), applied on the periphery of which is an annular sheath 161A made of deformable material, preferably elastomeric material (e.g., silicone rubber).

The disk 160A is altogether identical to the disk of Figures 1-3, except that it has an outer diameter smaller than the inner diameter of the annular element 14 in so far as it is the sheath 161A that circumferentially bears upon the walls of the annular element 14 and - as may be seen in the figure - also upon the shoulder 20, thus ensuring tightness. The second apertures 18, 180, 181 are of a pre-formed type.

The insert 16A* can couple with interference fit within the annular element 14, bearing upon the shoulder 20, or may be freely floating within the element 14 itself, then to be gripped between the shoulder 20 and the collar 13 when the end portion 4 is coupled to the shell 6 to close the container 1.

With reference to Figure 5B, the insert 16B* is provided by superposition of a first disk 160B preferably made of rigid material, more preferably made of metal material (metal plate), on a second disk 161B made of deformable, preferably elastomeric, material (once again, preferably, silicone rubber).

Whereas the second apertures 18, 180, 181 on the disk 160B are provided in a pre-formed way, in order for them to perform their function it is possible to envisage, for the disk 161B, the following possibilities, in combination or as an alternative to one another:
- a plurality of pre-formed apertures in positions corresponding to the second apertures 18, 180, 181; and/or
- a plurality of orifices that can open under pressure in positions corresponding to the second apertures 18, 180, 181 on the disk 160B, in particular in the case where the second apertures in question are provided as in Figure 3.

Each orifice that can open under pressure can be provided by means of a through incision with cross-shaped, star-shaped, or Y-shaped geometry, or again with a geometry similar to that of the apertures 180, 181 of Figures 4A to 41 (meaning thereby a pure linear incision corresponding to a line of axis in the plane of each aperture).

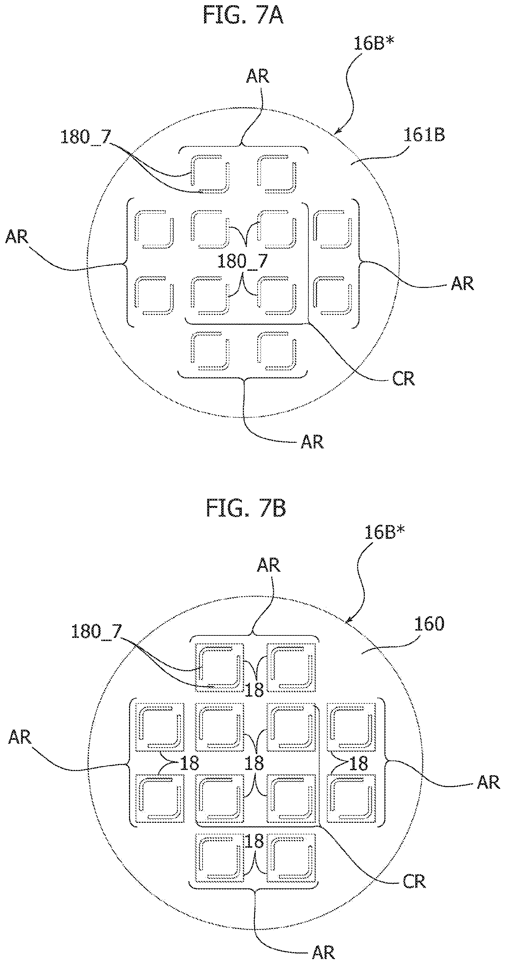

In a preferred embodiment of the insert 16B* illustrated in Figures 7A- 7B, the disk 160B is provided as in Figure 3 with a Greek-cross arrangement of quadrangular apertures 18, whereas the disk 161B has an identical Greek-cross arrangement of pairs of pre-formed slit-like apertures identified by the reference 180_7, which are shaped like a boomerang or a radiused L and are arranged so as to define an at least approximately quadrangular figure.

It is to be noted that the apertures 180_7 can be provided according to any one of the geometries of Figures 4A-4I.

Since the disk 161B is in any case in view of the volume V (directly or through the apertures 18, 180, 181, 180_7), when the end portion 4 is coupled to the shell 6, the pressure that impinges upon the volume V during use brings about deformation of the disk 161B in the area of the incisions in question, causing displacement of the tabs of material that result from the incisions themselves since these cannot be withheld by the rigid material of the disk 160B. In this way, the orifice opens under pressure, meaning thereby that there a widening of the passageway for the liquid is formed, whether the passageway be provided only via incision or by means of a pre-formed aperture on a non-rigid support as in Figure 7A-7B. In this way, the function and operation of the second apertures 18 is maintained.

The insert 16B* can be interference fitted into the annular element 14, coming to bear upon the shoulder 20, or may be freely floating within the element 14 itself, then to be gripped between the shoulder 20 and the collar 13 when the end portion 4 is coupled to the shell 6 to close the container 1.

With reference to Figure 5C, the insert 16C* may be considered, so to speak, as the dual of the insert 16A*. In this embodiment, a first disk 161C made of deformable material, preferably elastomeric, is bordered by a ring 160C preferably made of rigid material, preferably metal material. Preferably, as may be seen in the figure, the axially most projecting element is the disk 161D, in such a way that the elastomeric material can in any case exert a sealing action.

For the disk 161C two possibilities may be envisaged. A first possibility consists in providing the apertures 18/180/181 pre-formed as illustrated in Figures 4A-4I directly in the disk 161C, whereas a second possibility consists in providing the second apertures 18 as orifices that can open under pressure as described for the insert 16B*. It is of course possible to envisage also hybrid solutions in which pre-formed apertures and orifices that can open under pressure coexist.

The insert 16C* can be interference fitted into the annular element 14, coming to bear upon the shoulder 20, or may be freely floating within the element 14 itself, then to be gripped between the shoulder 20 and the collar 13 when the end portion 4 is coupled to the shell 6 to close the container 1. Since the portion of the insert 16C* that comes into contact with the shoulder 22 is the ring 160C, it is preferable for an annular gasket to be set on the shoulder 22 to provide a seal.

Finally, with reference to Figure 5D, the insert 16D* includes a disk 160D preferably made of rigid material and more preferably metal material (metal plate) integrally coated by a sheath 161D made of deformable material, preferably elastomeric material.

The insert 16D* is substantially a variant of the insert 16A*, where the sheath 161A extends over the entire surface of the disk 160A. The alternatives described below are possible to provide the second apertures.

In the insert 16D* the apertures 18/180/181 may be provided as apertures of a pre-formed type both in the disk 160D and in the sheath 161D (obviously in positions corresponding to the apertures in the disk 160D and on both faces of the sheath). In these embodiments, the apertures in the disk and sheath are of an identical shape and position, and are provided as any one of the examples of Figures 4A- 41 and 7A-7B (obviously, as regards Figures 7A-7B, only the shape of the apertures 180_7 is understood). In this way, each aperture 18 is defined by a sequence of three identical through apertures: in the sheath, in the disk, and again in the sheath.

In the case where the apertures in the disk 160D are of the type illustrated in Figure 3, the sheath 161D is provided - in positions corresponding to the apertures on the disk 180D - with pre-formed through apertures with the geometry illustrated in any one of Figures 4A-4I or else in Figures 7A-7B. The apertures in question traverse the entire thickness of the sheath 161D. Moreover, according to the deformability of the material of the sheath 161D, it is possible to modulate the behaviour of the second apertures. For instance, with sheaths 161D with low deformability, the behaviour of the second apertures will approach more closely that of pre-formed apertures on a substantially rigid support.

With higher degrees of deformability, the behaviour may resemble more closely that of orifices that can open under pressure.

If the deformability is very high, it is possible in the limit to provide the second apertures 18 as orifices that can open under pressure, which include through incisions, instead of pre-formed apertures.

The behaviour can be modulated, among other things, thanks to the fact that the apertures in the disk 160D are oversized with respect to those in the sheath in such a way that the apertures in the disk function substantially as a frame within which a diaphragm defined by the corresponding portion of sheath extends and can undergo deformation.

The insert 16D* can be interference fitted into the annular element 14, coming to bear upon the shoulder 20, or may be freely floating within the element 14 itself, then to be gripped between the shoulder 20 and the collar 13 when the end portion 4 is coupled to the shell 6 to close the container 1 (the presence of the sheath 161D may eliminate the need for an annular gasket on the shoulder 22).

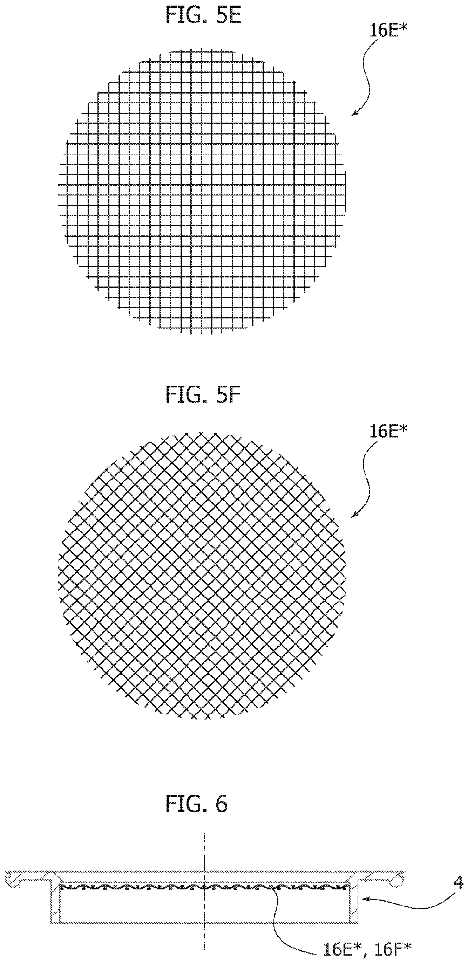

Finally, with reference to Figures 5E and 5F, in yet other embodiments the insert 16 can be provided as a mesh filtering element, with a preferably square/quadrangular mesh (Figure 5E, insert 16E*) or rhomboidal mesh (Figure 5F, insert 16F*). In both cases, the insert 16 takes the form of a portion of mesh (of a circular shape) that is coupled to the annular element 14 that bears upon the shoulder 20, possibly with an annular sheath along the periphery.

It is moreover to be noted that the inserts 16E*, 16F* can be used instead of the disk 160A of Figure 5A.

Also the insert 16E*/16F* can be interference fitted into the annular element 14, coming to bear upon the shoulder 20, or may be freely floating within the element 14 itself, then to be gripped between the shoulder 20 and the collar 13 when the end portion 4 is coupled to the shell 6 to close the container 1.

The container 1 may be made of any material compatible with use in the foodstuff sector and is able to withstand the temperatures typical of the liquid used for the preparation of the beverage, typically water at a temperature close to boiling point.

In a preferred embodiment, the container 1 is made of metal material, for example, steel or aluminium, with the second apertures 18, 180, 181 provided - in the case where they are pre-formed - by laser cutting or milling, or else shearing.

In alternative embodiments, it is possible to use a rigid plastic material for producing the container 1, in the portions that are not made of deformable/elastomeric material, with consequent savings in terms of production costs. In this case, the container 1 may be provided either by using traditional injection-moulding techniques or by means of a 3D printer.

As regards use of the container 1, the user has the possibility of filling the internal volume V with any precursor in powder form, or also any granular precursor or precursor in the form of shredded leaves (such as tea).

The removability of the end portion 4 enables loading of the precursor in powder form in the internal volume of the container 1 (hence enabling recharging thereof, if need be), this being facilitated by the fact that the loading operation is carried out on the side of larger dimensions of the container 1 (the end portion 4 to be precise).

It should be borne in mind in this connection that it is moreover possible to provide the container 1, envisaging that also the first end portion 2 is removable, for example, to facilitate the operations of thorough cleaning thereof. Since the end portion 2 is operatively subject to a smaller number of cycles of removal and re-positioning, it is preferable for the coupling to the shell 6 to be provided by means of a threaded joint (but this does not exclude in any case coupling with a seal gasket, as in the case of the end portion 4).

In the case of coffee, the hot water supplied by the machine in which the container 1 is used as cartridge penetrates into the container 1 through the access apertures 8 and occupies the internal volume V.

In so doing, the (pressurised) hot water percolates through the coffee in the internal volume V. The interaction between the hot water and the ground coffee, leads to obtaining liquid coffee that flows out from the apertures 18/180/181.

Before any use of the container 1, the user can select the insert 16 in the configuration, amongst all the possible combinations described herein, and/or amongst the ones physically available to the user, that affords the best results for the type of beverage, and/or for the local characteristics of the beverage itself.

In this way, according to the invention, it is possible to define a kit for the preparation of beverages that includes a container 1 and a plurality of inserts 16, each provided with second apertures 18 of variable shape, and/or type, and/or arrangement that are specific for a given type and/or local variety of substance for the preparation of a beverage.

It should moreover be noted, with reference in particular to the insert 16D*, that it is moreover possible to provide a kit including just inserts of this type, which differ not for the shape, and/or type, and/or arrangement of the second apertures, but for the deformability of the sheath 161D, which in turn affects the behaviour of the orifices, as described previously.

It is moreover possible to envisage mixed kits including a range of inserts 16D* with sheaths 161D with variable deformabilities and a range of inserts 16 each provided with second apertures 18 of a variable shape, and/or type, and/or arrangement that are specific for a given type and/or local variety of substance for the preparation of a beverage.

Once the insert 16 has been chosen, it is positioned in the seat on the annular element 14, and the end portion 4 is then closed on the collar 13, of course after prior filling of the volume V with the right amount of substance for preparing the beverage.

In this way, whatever the beverage and/or local variety, there will always be the certainty of an optimal result in terms of quality of the beverage obtained and of efficiency of operation of the container 1 and of the dispensing machine.

Of course, the details of construction and the embodiments may vary widely with respect to what has been described and illustrated herein, without thereby departing from the sphere of protection of the present invention, as defined by the annexed claims.

## Claims

1. A re-usable container (1) for a substance for the preparation of a liquid beverage, particularly configured for use as a capsule for a beverage dispensing machine, the container including:
- a first end portion (2),
- a second end portion (4),
- a shell (6) comprised between said first end portion and second end portion (2, 4) and delimiting therewith an internal volume (V) of the container (1) configured for housing a substance for the preparation of a liquid beverage,
wherein:
- said first end portion (2) includes one or more first apertures (8) configured for allowing the inlet of a liquid into said internal volume (V),
- said second end portion (4) including a plurality of second apertures (18, 180, 181, 180_7) configured for allowing the outlet of a beverage that can be obtained by interaction of said liquid with a substance for the preparation of a liquid beverage within said internal volume (V),
wherein furthermore said second end portion (4) is removable,
the container (1) being **characterized in that** said second end portion (4) includes an annular element (14) configured for coupling with said shell (6) and an insert (16; 16A, 16B, 16C, 16D; 16E, 16F, 16G, 16h, 161; 16A*, 16B*, 16C*, 16D*; 16E*, 16F*) that can be removably coupled into said annular element (14) and having said second apertures (18, 180, 181)

2. The container (1) according to Claim 1, wherein said annular element (14) includes a shoulder (20) that provides an abutment surface to said insert (16).

3. The container (1) according to any of the previous claims, wherein said insert (16; 16A, 16B, 16C, 16D; 16E, 16F, 16G, 16H, 161; 16A*, 16B*, 16D*; 16E*, 16F*) includes a disc (16, 160A, 160B, 160D), preferably made of metal material, having said second apertures (18, 180, 181) pre-formed.

4. The container (1) according to Claim 3, wherein said disc (160A) includes an annular sheath (161A) made of deformable material, preferably elastomeric, arranged on the periphery thereof.

5. The container according to any of claims 1 and 2, wherein said insert (16B*) includes a first disc (160B), preferably made of metal material, having said second apertures (18, 180, 181) pre-formed and overlapping a second disc (161B) made of deformable material, preferably elastomeric, said second disc (161B) including, in combination of in alternative:
- pre-formed through apertures in correspondence of the second apertures of said first disc (160B),
- orifices openable under pressure (180_7) in correspondence of the second apertures (18) of said first disc (160B).

6. The container (1) according to any of claims 1 and 2, wherein said insert (16C*) includes a disc (161C) made of deformable material, preferably elastomeric, which is bordered by an annular element (160C) preferably made of metal material, wherein said disc (161C) made of deformable material includes, in combination or in alternative:
- pre-formed through apertures (18, 180, 181),
- orifices openable under pressure, preferably defined by through incisions.

7. The container (1) according to any of claims 1 and 2, wherein said insert (16D*) includes a disc (160D), preferably made of metal material, having said second apertures pre-formed and enclosed in a sheath (161D) made of deformable material, preferably elastomeric, wherein said insert (16D*) includes, in alternative and as a function of said second apertures:
- pre-formed through apertures both on the disc (160D) and on the sheath (161D), the apertures on the sheath (161D) being in positions corresponding to the apertures on the disc (160D),
- orifices openable under pressure (180_7) provided in the sheath (161D) in positions corresponding to through apertures on the disc (160D), the through apertures on the disc (160D) being oversized with respect to the orifices openable under pressure (180_7) on the sheath (161D).

8. The container (1) according to any of claims 1, 2, or 4, wherein said insert (16E*, 16F*) includes a mesh filtering element.

9. The container (1) according to any of the previous claims, wherein said insert (16; 16A, 16B, 16C, 16D; 16E, 16F, 16G, 16H, 161; 16A*, 16B*, 16D*; 16E*, 16F*) is configured for interference fitting into said annular element (14).

10. A kit for the preparation of a liquid beverage including a container (1) according to any of the previous claims and a plurality of different inserts (16; 16A, 16B, 16C, 16D; 16E, 16F, 16G, 16H, 161; 16A*, 16B*, 16D*; 16E*, 16F*).

## Patentansprüche

1. Wiederverwendbarer Behälter (1) für eine Substanz zur Zubereitung eines flüssigen Getränks, insbesondere konfiguriert zur Verwendung als Kapsel für eine Getränkeabgabemaschine, wobei der Behälter Folgendes beinhaltet:
- einen ersten Endabschnitt (2),
- einen zweiten Endabschnitt (4),
- einen Mantel (6), der zwischen dem ersten Endabschnitt und dem zweiten Endabschnitt (2, 4) umfasst ist und mit diesen ein Innenvolumen (V) des Behälters (1) begrenzt, das zum Aufnehmen einer Substanz zur Zubereitung eines flüssigen Getränks konfiguriert ist,
wobei:
- der erste Endabschnitt (2) eine oder mehrere erste Aperturen (8) beinhaltet, die so konfiguriert sind, dass sie den Einlass einer Flüssigkeit in das Innenvolumen (V) ermöglichen,
- der zweite Endabschnitt (4) eine Vielzahl von zweiten Aperturen (18, 180, 181, 180_7) beinhaltet, die so konfiguriert sind, dass sie den Auslass eines Getränks ermöglichen, das durch Wechselwirkung der Flüssigkeit mit einer Substanz zur Zubereitung eines flüssigen Getränks innerhalb des Innenvolumens (V) erhalten werden kann,
wobei ferner der zweite Endabschnitt (4) abnehmbar ist,
wobei der Behälter (1) **dadurch gekennzeichnet ist, dass** der zweite Endabschnitt (4) ein ringförmiges Element (14), das zur Kopplung mit dem Mantel (6) konfiguriert ist, und einen Einsatz (16; 16A, 16B, 16C, 16D; 16E, 16F, 16G, 16h, 16I; 16A*, 16B*, 16C*, 16D*; 16E*, 16F*) beinhaltet, der abnehmbar in das ringförmige Element (14) gekoppelt werden kann und die zweiten Aperturen (18, 180, 181) aufweist.

2. Behälter (1) nach Anspruch 1, wobei das ringförmige Element (14) eine Schulter (20) beinhaltet, die eine Anlagefläche für den Einsatz (16) bereitstellt.

3. Behälter (1) nach einem der vorhergehenden Ansprüche, wobei der Einsatz (16; 16A, 16B, 16C, 16D; 16E, 16F, 16G, 16H, 16I; 16A*, 16B*, 16D*; 16E*, 16F*) eine Scheibe (16, 160A, 160B, 160D), bevorzugt aus metallischem Material, beinhaltet, in der die zweiten Aperturen (18, 180, 181) vorgeformt sind.

4. Behälter (1) nach Anspruch 3, wobei die Scheibe (160A) eine an ihrem Umfang angeordnete ringförmige Hülle (161A) aus verformbarem Material, bevorzugt aus Elastomer, beinhaltet.

5. Behälter nach einem der Ansprüche 1 und 2, wobei der Einsatz (16B*) eine erste Scheibe (160B), bevorzugt aus metallischem Material, beinhaltet, in der die zweiten Aperturen (18, 180, 181) vorgeformt sind und die eine zweite Scheibe (161B) aus verformbarem Material, bevorzugt aus Elastomer, überlappt, wobei die zweite Scheibe (161B) in Kombination oder alternativ Folgendes beinhaltet:
- vorgeformte Durchgangsaperturen in Entsprechung zu den zweiten Aperturen der ersten Scheibe (160B),
- unter Druck öffenbare Öffnungen (180_7) in Entsprechung zu den zweiten Aperturen (18) der ersten Scheibe (160B).

6. Behälter (1) nach einem der Ansprüche 1 und 2, wobei der Einsatz (16C*) eine Scheibe (161C) aus verformbarem Material, bevorzugt aus Elastomer, beinhaltet, die von einem ringförmigen Element (160C), bevorzugt aus metallischem Material, begrenzt ist, wobei die Scheibe (161C) aus verformbarem Material in Kombination oder alternativ Folgendes beinhaltet:
- vorgeformte Durchgangsaperturen (18, 180, 181),
- unter Druck öffenbare Öffnungen, die bevorzugt durch Durchschnitte definiert sind.

7. Behälter (1) nach einem der Ansprüche 1 und 2, wobei der Einsatz (16D*) eine Scheibe (160D), bevorzugt aus metallischem Material, beinhaltet, in der die zweiten Aperturen vorgeformt sind und die in einer Hülle (161D) aus verformbarem Material, bevorzugt aus Elastomer, eingeschlossen ist, wobei der Einsatz (16D*) alternativ und in Abhängigkeit von den zweiten Aperturen Folgendes beinhaltet:
- vorgeformte Durchgangsaperturen sowohl auf der Scheibe (160D) als auch auf der Hülle (161D), wobei die Aperturen auf der Hülle (161D) an Positionen liegen, die den Aperturen auf der Scheibe (160D) entsprechen,
- unter Druck öffenbare Öffnungen (180_7), die in der Hülle (161D) an Positionen vorhanden sind, die Durchgangsaperturen auf der Scheibe (160D) entsprechen, wobei die Durchgangsaperturen auf der Scheibe (160D) in Bezug auf die unter Druck öffenbaren Öffnungen (180_7) auf der Hülle (161D) überdimensioniert sind.

8. Behälter (1) nach einem der Ansprüche 1, 2 oder 4, wobei der Einsatz (16E*, 16F*) ein Maschenfilterelement beinhaltet.

9. Behälter (1) nach einem der vorhergehenden Ansprüche, wobei der Einsatz (16; 16A, 16B, 16C, 16D; 16E, 16F, 16G, 16H, 16I; 16A*, 16B*, 16D*; 16E*, 16F*) für Presspassung in das ringförmige Element (14) konfiguriert ist.

10. Set zur Zubereitung eines flüssigen Getränks, das einen Behälter (1) nach einem der vorhergehenden Ansprüche und eine Vielzahl verschiedener Einsätze (16; 16A, 16B, 16C, 16D; 16E, 16F, 16G, 16H, 16I; 16A*, 16B*, 16D*; 16E*, 16F*) beinhaltet.

## Revendications

1. Récipient réutilisable (1) pour une substance destinée à la préparation d'une boisson liquide, particulièrement configuré pour être utilisé comme capsule pour une machine de distribution de boissons, le récipient comprenant :
- une première partie d'extrémité (2),
- une deuxième partie d'extrémité (4),
- une coque (6) comprise entre lesdites première partie d'extrémité et deuxième partie d'extrémité (2, 4) et délimitant avec celles-ci un volume interne (V) du récipient (1) configuré pour recevoir une substance pour la préparation d'une boisson liquide,
dans lequel :
- ladite première partie d'extrémité (2) comprend une ou plusieurs premières ouvertures (8) configurées pour permettre l'entrée d'un liquide dans ledit volume interne (V),
- ladite deuxième partie d'extrémité (4) comprenant une pluralité de deuxièmes ouvertures (18, 180, 181, 180_7) configurées pour permettre la sortie d'une boisson pouvant être obtenue par interaction dudit liquide avec une substance pour la préparation d'une boisson liquide à l'intérieur dudit volume interne (V),
dans lequel en outre ladite deuxième partie d'extrémité (4) est amovible,
le récipient (1) étant **caractérisé en ce que** ladite deuxième partie d'extrémité (4) comprend un élément annulaire (14) configuré pour un couplage avec ladite coque (6) et un insert (16 ; 16A, 16B, 16C, 16D ; 16E, 16F, 16G, 16h, 16I ; 16A*, 16B*, 16C*, 16D* ; 16E*, 16F*) qui peut être couplé de manière amovible dans ledit élément annulaire (14) et ayant lesdites deuxièmes ouvertures (18, 180, 181).

2. Récipient (1) selon la revendication 1, dans lequel ledit élément annulaire (14) comprend un épaulement (20) qui fournit une surface de butée audit insert (16).

3. Récipient (1) selon l'une quelconque des revendications précédentes, dans lequel ledit insert (16 ; 16A, 16B, 16C, 16D ; 16E, 16F, 16G, 16H, 16I ; 16A*, 16B*, 16D* ; 16E*, 16F*) comprend un disque (16, 160A, 160B, 160D), de préférence en matériau métallique, ayant lesdites deuxièmes ouvertures (18, 180, 181) préformées.

4. Récipient (1) selon la revendication 3, dans lequel ledit disque (160A) comprend une gaine annulaire (161A) en matériau déformable, de préférence en élastomère, agencée à sa périphérie.

5. Récipient selon l'une des revendications 1 et 2, dans lequel ledit insert (16B*) comprend un premier disque (160B), de préférence en matériau métallique, ayant lesdites deuxièmes ouvertures (18, 180, 181) préformées et chevauchant un deuxième disque (161B) en matériau déformable, de préférence en élastomère, ledit deuxième disque (161B) comprenant, en combinaison ou en alternative :
- des ouvertures traversantes préformées en correspondance avec les deuxièmes ouvertures dudit premier disque (160B),
- des orifices pouvant s'ouvrir sous pression (180_7) en correspondance avec les deuxièmes ouvertures (18) dudit premier disque (160B).

6. Récipient (1) selon l'une des revendications 1 et 2, dans lequel ledit insert (16C*) comprend un disque (161C) en matériau déformable, de préférence en élastomère, qui est bordé par un élément annulaire (160C) de préférence en matériau métallique, dans lequel ledit disque (161C) en matériau déformable comprend, en combinaison ou en alternative :
- des ouvertures traversantes préformées (18, 180, 181),
- des orifices pouvant s'ouvrir sous pression, définis de préférence par des incisions traversantes.

7. Récipient (1) selon l'une des revendications 1 et 2, dans lequel ledit insert (16D*) comprend un disque (160D), de préférence en matériau métallique, ayant lesdites deuxièmes ouvertures préformées et contenues dans une gaine (161D) en matériau déformable, de préférence en élastomère, dans lequel ledit insert (16D*) comprend, en alternative et en fonction desdites deuxièmes ouvertures :
- des ouvertures traversantes préformées à la fois sur le disque (160D) et sur la gaine (161D), les ouvertures sur la gaine (161D) étant dans des positions correspondant aux ouvertures sur le disque (160D),
- des orifices pouvant s'ouvrir sous pression (180_7) prévus dans la gaine (161D) dans des positions correspondant à des ouvertures traversantes sur le disque (160D), les ouvertures traversantes sur le disque (160D) étant surdimensionnées par rapport aux orifices pouvant s'ouvrir sous pression (180_7) sur la gaine (161D).

8. Récipient (1) selon l'une des revendications 1, 2 ou 4, dans lequel ledit insert (16E*, 16F*) comprend un élément filtrant à mailles.

9. Récipient (1) selon l'une des revendications précédentes, dans lequel ledit insert (16 ; 16A, 16B, 16C, 16D ; 16E, 16F, 16G, 16H, 16I ; 16A*, 16B*, 16D* ; 16E*, 16F*) est configuré pour un ajustement serré dans ledit élément annulaire (14).

10. Kit pour la préparation d'une boisson liquide comprenant un récipient (1) selon l'une des revendications précédentes et une pluralité d'inserts différents (16 ; 16A, 16B, 16C, 16D ; 16E, 16F, 16G, 16H, 16I ; 16A*, 16B*, 16D* ; 16E*, 16F*).
